# FASCICULE DE BREVET EUROPEEN

(11) **EP 3 548 365 B1**
(45) Date de publication et mention de la délivrance du brevet: **11.08.2021**
(21) Numéro de dépôt: 17811216.5
(22) Date de dépôt: 20.11.2017
(51) Int. Cl.: B62D 35/02

(54) **CARENAGE AERODYNAMIQUE POUR ROUE ARRIERE D'UN VEHICULE AUTOMOBILE**
AERODYNAMISCHE VERKLEIDUNG FÜR EIN HINTERRAD EINES KRAFTFAHRZEUGS
AERODYNAMIC FAIRING FOR A MOTOR VEHICLE REAR WHEEL

(30) Priorité: 02.12.2016 FR 1661866
(43) Date de publication de la demande: 09.10.2019
(73) Titulaire: RENAULT s.a.s., 92100 Boulogne-Billancourt (FR)
(72) Inventeur: GROSDIDIER, Marc, 91650 St Yon (FR)
(86) Numéro de dépôt international: PCT/EP2017/079733
(87) Numéro de publication internationale: WO 2018/099745

(56) Documents cités:
- FR-A1- 3 024 423
- JP-A- 2005 199 828
- US-A1- 2015 048 648

## Description

### Domaine de l'invention :

La présente invention concerne un carénage aérodynamique pour roue arrière d'un véhicule automobile. L'invention se rapporte plus particulièrement à un carénage comprenant un écran principal disposé de façon sensiblement horizontale sous un soubassement du véhicule dans l'espace situé entre les roues arrière du véhicule et à proximité de l'une d'entre elles.

### Etat de la technique :

Sur un véhicule typé sport, nous utilisons classiquement le soubassement de la voiture pour diminuer la portance du véhicule et par conséquent augmenter l'appui au sol s'exerçant sur le véhicule. Un diffuseur aérodynamique est un dispositif prévu à cet effet qui est situé sous le soubassement du véhicule. Le diffuseur joue un rôle important en améliorant grandement la stabilité et l'adhérence à haute vitesse du véhicule. Or les roues arrière du véhicule provoquent de fortes perturbations qui se dirigent vers le diffuseur et empêchent ce dernier de fonctionner sur l'intégralité de sa surface et avec son efficacité maximale.

Le document FR 3 024 423 A1 décrit un carénage aérodynamique adjacent à une roue arrière d'un véhicule automobile comprenant un écran principal disposé sous le véhicule et un écran secondaire s'avançant vers la roue.

Le document US 2015/048648 A1 décrit un carénage aérodynamique selon le préambule de la revendication 1.

### But de l'invention :

L'invention a pour but de pallier tout ou partie des inconvénients précédents en proposant un dispositif apte à réduire les perturbations aérodynamiques dues aux roues du véhicule et de maitriser au mieux le sillage de l'air sous le véhicule.

### Objet de l'invention :

A cet effet, l'invention a pour objet un carénage aérodynamique pour roue arrière d'un véhicule automobile, comprenant un écran principal disposé de façon sensiblement horizontale sous un soubassement du véhicule dans l'espace situé entre les roues arrière du véhicule et à proximité de l'une d'entre elles, caractérisé en ce qu'il comprend un écran secondaire formant une extension latérale s'avançant dans la cavité de la roue adjacente suivant une direction perpendiculaire à la direction longitudinale du véhicule, l'écran secondaire supportant un déflecteur sensiblement vertical situé dans la cavité de ladite roue adjacente, le déflecteur ayant un bord libre tourné vers le sol présentant un profil courbe.

Ce carénage très étendu du train arrière afin de fermer au maximum la cavité du passage de roue arrière, ce qui limite les perturbations dues à l'air susceptible de s'engouffrer dans la cavité de la roue.

Selon d'autres caractéristiques avantageuses de l'invention :
- le déflecteur est orienté de façon sensiblement parallèle à la direction longitudinale du véhicule ;
- le déflecteur a un bord présentant un profil en arc de cercle ;
- le déflecteur a un bord présentant un profil en arc de cercle dont le rayon est compris entre 120 et 140 mm ;
- l'écran secondaire a la forme générale d'un rectangle saillant de l'écran principal avec une dimension transversale de l'ordre de 50 à 60 mm, notamment 55 mm, mesurée suivant la direction transversale du véhicule ;
- le déflecteur est situé à une distance de l'ordre de 50 à 60 mm, notamment 55 mm, mesurée suivant la direction transversale du véhicule par rapport au bord latéral adjacent de l'écran principal.

L'invention a également pour objet un véhicule comprenant un soubassement et au moins deux carénages aérodynamiques ayant tout ou partie des caractéristiques précédentes, associés respectivement aux deux roues arrière du véhicule.

Selon d'autres caractéristiques de l'invention, le carénage aérodynamique est fixé sur un bras de suspension du train de roues arrière du véhicule, notamment par des vis.

Selon d'autres caractéristiques de l'invention, le véhicule comprend un diffuseur aérodynamique situé sensiblement entre les carénages aérodynamiques.

### Exposé de l'invention :

L'invention sera mieux comprise à la lecture de la description suivante d'un exemple non limitatif de l'invention, et à la lumière des dessins annexés sur lesquels :
- la figure 1 représente une vue en perspective d'une zone arrière du dessous du soubassement d'un véhicule automobile équipé d'un carénage aérodynamique selon l'invention associé à une roue arrière du véhicule ;
- la figure 2 représente une vue similaire à la figure 1, illustrant le sillage aérodynamique dans la zone d'une roue arrière d'un véhicule équipé d'un carénage aérodynamique selon l'invention.

Pour les besoins de la description, les directions et orientations sont indiquées en référence au repère XYZ classiquement utilisé en conception automobile, dans lequel X est la direction longitudinale avant-arrière du véhicule, dirigé vers l'arrière, Y est la direction transversale au véhicule, dirigé vers la droite et Z la direction verticale dirigée vers le haut.

Les notions avant-arrière s'entendent par rapport au sens de marche normal du véhicule qui est dirigé vers l'avant.

Le terme « sensiblement » indique qu'un léger écart est admis par rapport à une position ou disposition nominale déterminée, tout en restant inclus dans le cadre de l'invention. Par exemple « sensiblement vertical » indique qu'un écart de l'ordre de 10° par rapport à une orientation strictement ve rticale est admis dans le cadre de l'invention.

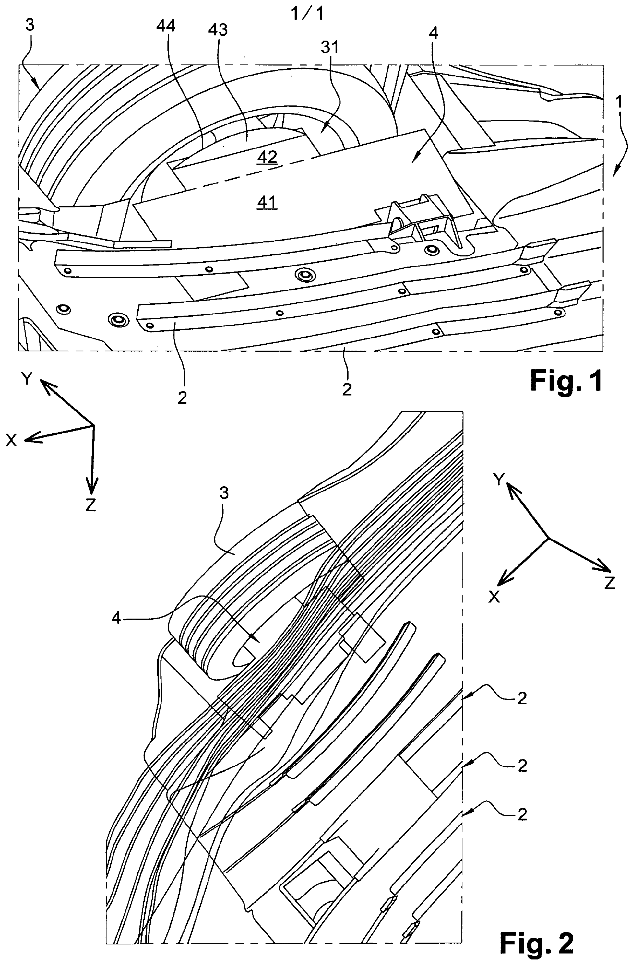

On a représenté à la figure 1 une vue partielle d'un véhicule automobile ayant un soubassement 1 dont une partie arrière comporte un diffuseur aérodynamique favorisant l'appui au sol du véhicule. Ce diffuseur comporte des dérives 2 formant des nervures sensiblement longitudinales pour le guidage de l'air au contact de la surface inférieure du soubassement du véhicule.

Le véhicule comporte dans une zone adjacente à chaque roue arrière 3 du véhicule, du côté intérieur de la roue, un carénage aérodynamique 4 comprenant un écran principal 41 disposé de façon sensiblement horizontale sous le soubassement du véhicule dans l'espace situé entre les roues arrière 3 du véhicule et à proximité de l'une d'entre elles.

Pour la clarté de l'exposé, seule une zone adjacente à l'une des roue arrière du véhicule est représentée sur les figures, étant entendu que la zone correspondant à l'autre roue arrière est équipée d'un dispositif similaire conformé de façon symétrique.

Le carénage comprend également un écran secondaire 42 formant une extension latérale s'avançant dans la cavité 31 de la roue arrière adjacente 3 suivant une direction perpendiculaire à la direction longitudinale X du véhicule. Selon l'invention, l'écran secondaire supporte un déflecteur 43 sensiblement vertical situé dans la cavité de ladite roue adjacente 3.

Le carénage du train arrière est de ce fait très étendu et assure une fermeture maximale de la cavité du passage de roue arrière qui est tournée vers l'intérieur du véhicule, c'est-à-dire vers un plan médian vertical longitudinal du véhicule. Ce carénage permet de réduire les perturbations et crée une surface qui travaille utilement pour le véhicule en créant de l'appui pour le SCz, soit une réduction du coefficient de portance.

Le déflecteur 43 du carénage aérodynamique 4 est orienté de façon sensiblement parallèle à la direction longitudinale X du véhicule.

Ce déflecteur 43 a un bord libre 44 tourné vers le sol présentant un profil courbe.

Dans un mode de réalisation de l'invention, le bord libre 44 présente un profil en arc de cercle. Cet arc de cercle a typiquement un rayon compris entre 120 et 140 mm pour couvrir des jantes de 17 et 18". Ce rayon peut varier en fonction de la dimension de la jante utilisée.

Comme on le voit à la figure 1, l'écran secondaire 42 a typiquement la forme générale d'un rectangle saillant de l'écran principal 41 avec une dimension transversale de l'ordre de 50 à 60 mm, par exemple 55 mm, mesurée suivant la direction transversale Y du véhicule. L'écran principal 41 a lui-même la forme générale d'un rectangle dans l'exemple de réalisation illustré. Ces deux rectangles sont orientés dans le sens de leur longueur suivant la direction longitudinale du véhicule et sont disposés de façon juxtaposée. Ces dimensions et formes sont indiquées à titre d'exemple non limitatif.

Le déflecteur 43 est situé à une distance de l'ordre de 50 à 60 mm, par exemple 55 mm, mesurée suivant la direction transversale Y du véhicule par rapport au bord latéral adjacent de l'écran principal 41. Cette distance est indiquée à titre d'exemple non limitatif. Le bord latéral correspond aux deux bords jointifs de l'écran principal 41 et de l'écran secondaire 42.

Le déflecteur 43 formant une paroi ayant un bord 43 en arc de cercle est situé dans le masque de la roue 3 pour ne pas gêner la garde au sol. Le bord 43 ferme la zone basse de la roue 3 au maximum en gardant un espace minimal de l'ordre de 10 mm avec la roue 3 débattue pour éviter les contacts. Le débattement de la roue 3 correspond à sa course mesurée essentiellement suivant la direction verticale, sous l'effet de la suspension. Ce déflecteur permet de bloquer les perturbations sortantes de la jante et d'améliorer le fonctionnement du carénage et également des autres éléments du soubassement comme le diffuseur aérodynamique. On comprend qu'un tel carénage aérodynamique est particulièrement utile en présence d'un diffuseur, cependant son effet est également positif en l'absence de diffuseur aérodynamique, afin de réduire les perturbations aérodynamique dues à la cavité de la roue 3.

Ce carénage peut être fait dans différents matériaux, par exemple en matière plastique ou métallique. Le carénage peut être réalisé dans une plaque d'aluminium coupée pliée pour éviter les investissements.

Si le carénage est en plastique, celui-ci peut être complété sur sa partie supérieure par une forme d'écope pour alimenter en air les disques de frein afin de les refroidir et améliorer l'endurance du freinage.

On note que le carénage selon l'invention est fixé en appui sur le bras par des vis, par exemple trois vis (non représenté).

Bien entendu, l'invention n'est pas limitée aux modes ou variantes de réalisation décrits précédemment et comprends tous les équivalents techniques de ces moyens dans le cadre de l'étendue de protection définie par les revendications suivantes.

## Revendications

1. Carénage aérodynamique (4) pour roue arrière (3) d'un véhicule automobile, comprenant un écran principal (41) disposé de façon sensiblement horizontale sous un soubassement (1) du véhicule dans l'espace situé entre les roues arrière (3) du véhicule et à proximité de l'une d'entre elles, **caractérisé en ce qu'**il comprend un écran secondaire (42) formant une extension latérale s'avançant dans la cavité (31) de la roue adjacente suivant une direction perpendiculaire à la direction longitudinale (X) du véhicule, l'écran secondaire (42) supportant un déflecteur (43) sensiblement vertical situé dans la cavité (31) de ladite roue adjacente, le déflecteur ayant un bord libre tourné vers le sol présentant un profil courbe.

2. Carénage aérodynamique (4) selon la revendication 1, **caractérisé en ce que** le déflecteur (43) est orienté de façon sensiblement parallèle à la direction longitudinale (X) du véhicule.

3. Carénage aérodynamique (4) selon l'une quelconque des revendications précédentes, **caractérisé en ce que** le déflecteur (43) a un bord (44) présentant un profil en arc de cercle.

4. Carénage aérodynamique (4) selon l'une quelconque des revendications précédentes, **caractérisé en ce que** le déflecteur (43) a un bord présentant un profil en arc de cercle dont le rayon est compris entre 120 et 140 mm.

5. Carénage aérodynamique (4) selon l'une quelconque des revendications précédentes, **caractérisé en ce que** l'écran secondaire (42) a la forme générale d'un rectangle saillant de l'écran principal (41) avec une dimension transversale de l'ordre de 50 à 60 mm, notamment 55 mm, mesurée suivant la direction transversale (Y) du véhicule.

6. Carénage aérodynamique (4) selon l'une quelconque des revendications précédentes, **caractérisé en ce que** le déflecteur (43) est situé à une distance de l'ordre de 50 à 60 mm, notamment 55 mm, mesurée suivant la direction transversale (Y) du véhicule par rapport au bord latéral adjacent de l'écran principal (41).

7. Véhicule automobile comprenant un soubassement (1) et au moins deux carénages aérodynamiques (4) selon l'une quelconque des revendications précédentes associés respectivement aux deux roues arrière (3) du véhicule.

8. Véhicule automobile selon la revendication 7, **caractérisé en ce que** le carénage aérodynamique (4) est fixé sur un bras de suspension du train de roues arrière du véhicule.

9. Véhicule automobile selon les revendications 7 ou 8, **caractérisé en ce qu'**il comprend un diffuseur aérodynamique situé sensiblement entre les carénages aérodynamiques (4).

## Patentansprüche

1. Aerodynamische Verkleidung (4) für ein Hinterrad (3) eines Kraftfahrzeugs, die eine Hauptabdeckung (41) beinhaltet, die unter einem Unterboden (1) des Fahrzeugs in dem Raum, der sich zwischen den Hinterrädern (3) des Fahrzeugs befindet, und in der Nähe von einem von ihnen im Wesentlichen horizontal angeordnet ist, **dadurch gekennzeichnet, dass** sie eine sekundäre Abdeckung (42) beinhaltet, die eine seitliche Verlängerung bildet, die sich gemäß einer zu der Längsrichtung (X) des Fahrzeugs senkrechten Richtung in den Hohlraum (31) des angrenzenden Rads erstreckt, wobei die sekundäre Abdeckung (42) einen im Wesentlichen vertikalen Deflektor (43) trägt, der sich in dem Hohlraum (31) des angrenzenden Rads befindet, wobei der Deflektor eine zum Boden zeigende freie Kante aufweist, die ein gekrümmtes Profil aufweist.

2. Aerodynamische Verkleidung (4) nach Anspruch 1, **dadurch gekennzeichnet, dass** der Deflektor (43) zu der Längsrichtung (X) des Fahrzeugs im Wesentlichen parallel ausgerichtet ist.

3. Aerodynamische Verkleidung (4) nach einem der vorhergehenden Ansprüche, **dadurch gekennzeichnet, dass** der Deflektor (43) eine Kante (44) aufweist, die ein kreisbogenförmiges Profil aufweist.

4. Aerodynamische Verkleidung (4) nach einem der vorhergehenden Ansprüche, **dadurch gekennzeichnet, dass** der Deflektor (43) eine Kante aufweist, die ein kreisbogenförmiges Profil aufweist, dessen Radius zwischen 120 und 140 mm liegt.

5. Aerodynamische Verkleidung (4) nach einem der vorhergehenden Ansprüche, **dadurch gekennzeichnet, dass** die sekundäre Abdeckung (42) die Grundform eines Rechtecks aufweist, das mit einem Quermaß in der Größenordnung von 50 bis 60 mm, insbesondere 55 mm, von der Hauptabdeckung (41) vorsteht, gemessen gemäß der Querrichtung (Y) des Fahrzeugs.

6. Aerodynamische Verkleidung (4) nach einem der vorhergehenden Ansprüche, **dadurch gekennzeichnet, dass** sich der Deflektor (43) in einem Abstand in der Größenordnung von 50 bis 60 mm, insbesondere 55 mm, zu der angrenzenden Seitenkante der Hauptabdeckung (41) befindet, gemessen gemäß der Querrichtung (Y) des Fahrzeugs.

7. Kraftfahrzeug, das einen Unterboden (1) und mindestens zwei aerodynamische Verkleidungen (4) nach einem der vorhergehenden Ansprüche, die jeweils mit den zwei Hinterrädern (3) des Fahrzeugs assoziiert sind, beinhaltet.

8. Kraftfahrzeug nach Anspruch 7, **dadurch gekennzeichnet, dass** die aerodynamische Verkleidung (4) an einem Querlenker des hinteren Radsatzes des Fahrzeugs befestigt ist.

9. Kraftfahrzeug nach den Ansprüchen 7 oder 8, **dadurch gekennzeichnet, dass** es einen aerodynamischen Diffusor beinhaltet, der sich im Wesentlichen zwischen den aerodynamischen Verkleidungen (4) befindet.

## Claims

1. Aerodynamic fairing (4) for a rear wheel (3) of a motor vehicle, comprising a main screen (41) positioned substantially horizontally under a subframe (1) of the vehicle in the space situated between the rear wheels (3) of the vehicle and in proximity to one of them, **characterized in that** it comprises a secondary screen (42) forming a lateral extension advancing into the cavity (31) of the adjacent wheel in a direction at right angles to the longitudinal direction (X) of the vehicle, the secondary screen (42) supporting a substantially vertical spoiler (43) situated in the cavity (31) of said adjacent wheel, the spoiler having a free edge turned towards the ground that has a curved profile.

2. Aerodynamic fairing (4) according to Claim 1, **characterized in that** the spoiler (43) is oriented substantially parallel to the longitudinal direction (X) of the vehicle.

3. Aerodynamic fairing (4) according to either one of the preceding claims, **characterized in that** the spoiler (43) has an edge (44) that has a circular arc profile.

4. Aerodynamic fairing (4) according to any one of the preceding claims, **characterized in that** the spoiler (43) has an edge that has a circular arc profile with a radius of between 120 and 140 mm.

5. Aerodynamic fairing (4) according to any one of the preceding claims, **characterized in that** the secondary screen (42) has the general form of a rectangle protruding from the main screen (41) with a transverse dimension of the order of 50 to 60 mm, notably 55 mm, measured in the transverse direction (Y) of the vehicle.

6. Aerodynamic fairing (4) according to any one of the preceding claims, **characterized in that** the spoiler (43) is situated at a distance of the order of 50 to 60 mm, notably 55 mm, measured in the transverse direction (Y) of the vehicle with respect to the adjacent lateral edge of the main screen (41).

7. Motor vehicle comprising a subframe (1) and at least two aerodynamic fairings (4) according to any one of the preceding claims associated respectively with the two rear wheels (3) of the vehicle.

8. Motor vehicle according to Claim 7, **characterized in that** the aerodynamic fairing (4) is fixed onto a suspension arm of the rear wheel train of the vehicle.

9. Motor vehicle according to Claim 7 or 8, **characterized in that** it comprises an aerodynamic diffuser situated substantially between the aerodynamic fairings (4).
